# EUROPEAN PATENT SPECIFICATION

(11) **EP 2 288 877 B1**
(45) Date of publication and mention of the grant of the patent: **08.07.2015**
(21) Application number: 09772220.1
(22) Date of filing: 04.05.2009
(51) Int. Cl.: G01D 5/244, G01D 11/24, G01D 5/347

(54) **ENCODER HAVING ROTATION RESTRICTING MEMBER**
KODIERER MIT EINEM ROTATIONSBEGRENZENDEN TEIL
CODEUR MUNI D'UN ORGANE LIMITEUR DE ROTATION

(30) Priority: 09.06.2008 JP 2008150696; 16.07.2008 JP 2008184477
(43) Date of publication of application: 02.03.2011
(73) Proprietor: Dr. Johannes Heidenhain GmbH, 83301 Traunreut (DE)
(72) Inventor: OKUYAMA, Akihisa, Tokyo-to 194-0212 (JP); YAMASHITA, Mamoru, Tokyo-to 204-0003 (JP); NAKAMURA, Yoshiyuki, Kanagawa-ken 243-0303 (JP)
(86) International application number: PCT/EP2009/055348
(87) International publication number: WO 2010/000520

(56) References cited:
- EP-A1- 2 280 247
- DE-A1-102006 038 981
- JP-A- 2005 348 555
- US-A1- 2002 002 777

## Description

The present invention relates to a technique for fixing a rotary encoder that functions as a device for measuring an angle, an angular speed, a rotation amount, and the like.

A rotary encoder measures an angular position, an angular speed, a rotation amount, a rotation number, and the like of a rotating body such as a motor, an internal combustion engine, or an operation knob. Measured data is utilized for setting of a value dependent on a measurement value, indication, control of a machinery tool, adjustment, or other processing in accordance with a predetermined purpose.

In a case where a stator of an encoder is coupled to a rotatable measured subject such as a motor, there is provided a shaft coupling between a rotor and a rotation axis of the measured subject. However, the stator may be rotated along with the rotating rotor in such a state. Thus, an arrangement is required to prevent rotation of the stator. As the measured subject and the rotor are much larger than the encoder main body, the encoder itself is supported by the above described coupling arrangement. Therefore, it is not necessary to consider supporting the encoder in prevention of rotation.

As such an arrangement for preventing rotation, conventionally employed is a method in which a stator is locked or fixed to a measured subject main body by a member for preventing rotation. Examples of the member for preventing rotation include a bent metal plate, and those having various shapes, such as a column shape, which realize coupling between the stator and the measured subject in correspondence with shapes of the encoder and the measured subject. As described in Japanese Unexamined Patent Publication No. 2005-348555 there has also been employed a method in which a stator of an encoder is directly fixed to a measured subject main body.

However, as the member for preventing rotation and the stator of the encoder are fixed by screws in all the above described cases, such attachment requires a screwing process. This screwing process deteriorates working efficiency, and restricts mass production as well as cost reduction. In addition, such a process is extremely troublesome in a case where the attachment takes place in the field. Particularly in a case where the member for preventing rotation is attached to the encoder which is to be shipped integrally with a product, attachment is conducted by manpower due to difficulty in mechanical mounting, resulting in an increase in cost.

On the other hand, there are proposed various attaching methods in which no screw is used. In Laid-open patent publications US 2002/0002777, US 2002/0148123, DE 10026958, there is disclosed a structure for attaching an encoder to a motor in an axial direction. In the structure disclosed in these documents, an angle measurement device is inserted and disposed, so as to be buried, in a concave assembly space that is provided in a fixing target. A locking member referred to as a joint is then brought into contact with a stopper surface of a motor case, so that a stopper surface of the joint and the stopper surface of the motor case are brought into contact so as to be supported with each other. The joint further slides radially so as to be brought into contact with a peripheral surface of the motor case and to be radially expanded, thereby radially tightening to prevent relative rotation therebetween.

However, the above described joint is used for coupling a rotor and a shaft to prevent relative rotation therebetween. A tapered tip of the rotor is inserted into an inversely tapered hole provided in the motor shaft, and axial pressing force is biased thereto by the joint. Thus, it is difficult to apply this method to an encoder that utilizes an ordinary shaft coupling. Since it is particularly difficult to couple the motor shaft and the rotor in the assembly space, the joint is limitedly applicable to an angle measurement device of the type described above. There has been another problem that the motor is also required to have an assembly space, resulting in lack in generality. Furthermore, fixture onto the angle measurement device still requires a screwing process.

Document EP 2 280 247 A1, which is relevant under Art. 54(3) EPC, discloses an encoder with all features from the preamble of claim 1. In particular, a resolver is provided with a rotor plate fitted to a key groove in a rotating shaft and connected to the rotating shaft, and also with a resolver stator for detecting the rotational position of the rotor plate. The resolver stator is provided with a resolver cover for protecting a coil board of a stator core and fixed to the stator core. The coil board is provided with holes fitted to stator pins which are projection of the stator core, coil patterns each formed so as to center on the respective hole, and lead wires connected to the coil patterns formed on the coil board. The outer peripheral portion of the stator core is provided with long mounting holes for fixing the resolver to the housing of a rotating machine, such as an electric motor or a generator, and also with engaging holes engaging with claws of the resolver cover.

It is an object of the present invention to provide an encoder having a rotation restricting member that is generally applicable, requires no screwing process or the like at least in a case of being attached to the encoder, and enables easy attachment in a short period of time. It is another object of the present invention to provide an encoder having a rotation restricting member that enables attachment only from one specific axial direction and facilitates mechanical mounting.

These objects are accomplished by an encoder with the features of claim 1.

In an example embodiment of the present invention an encoder includes a rotor that is coupled to a rotation axis of a measured subject; a stator that rotatably supports the rotor; and a rotation restricting member that locks the stator to the measured subject, the rotation restricting member including a coupling part that functions as a base; a convex fixing part that extends along the rotation axis from the coupling part toward the stator; and an attaching part that extends in any direction from the coupling part or is formed integrally with the coupling part, and the stator having, at least on an attachment surface, a concave fixing part that is concave in a direction along the rotation axis, wherein the convex fixing part is inserted or press fitted into the concave fixing part so as to be locked thereto. The rotation restricting member is made of a plate member, and the attaching part extends from the coupling part to a direction opposite to the convex fixing part.

The encoder having a rotation restricting member may have an attaching part being formed to have a structure similar to that of the convex fixing part, and the measured subject also including a concave part similar to the concave fixing part.

The encoder having a rotation restricting member may have a coupling part extending in a lateral direction crossing the rotation axis of the rotor, the convex fixing parts respectively extending along the rotation axis from at least two different positions of the coupling part, and the attaching part extending to a direction opposite to the convex fixing parts from a position different from the convex fixing parts.

The encoder having a rotation restricting member, may have a coupling part having an opening that allows the rotation axis of the rotor to be inserted therethrough, and the coupling part being formed to be disposed around the rotation axis.

The encoder having a rotation restricting member may have convex fixing parts being disposed respectively at positions rotationally symmetric with each other or at corners of the coupling part, and the attaching parts being disposed respectively at positions rotationally symmetric with each other or at corners of the coupling part, and each of the attaching parts having a screw hole.

The encoder having a rotation restricting member may have a rotor having a code plate, and the stator having a detection element.

In accordance with the present invention, it is possible to attach an encoder to a measured subject extremely easily with high generality, resulting in a significant improvement in working efficiency. Furthermore, as all attaching operations can be conducted in an axial direction, automatic mounting is applicable. It is also possible to contribute to cost reduction due to mechanization.

An encoder having a rotation restricting member according to the present invention includes: a rotor that is coupled to a rotation axis of a measured subject; a stator that rotatably supports the rotor; and the rotation restricting member that locks the stator to the measured subject, the rotation restricting member including: a coupling part that functions as a base; a convex fixing part that extends along the rotation axis from the coupling part toward the stator; and an attaching part that extends in any direction from the coupling part or is formed integrally with the coupling part, and the stator having, at least on an attachment surface, a concave fixing part that is concave in a direction along the rotation axis, wherein the convex fixing part is inserted or press fitted into the concave fixing part so as to be locked thereto.

The convex fixing part functions to fix the rotation restricting member to the encoder, the measured subject, or both the encoder and the measured subject. The convex fixing part is inserted or press fitted into the concave fixing part that is formed in the stator or the measured subject, so that the rotation restricting member is locked. Thus, the convex fixing part of the rotation restricting member is inserted or press fitted to be locked into the concave fixing part of the rotor of the encoder or the measured subject, so that the rotation restricting member can be easily attached to the encoder or the measured subject without screwing. Moreover, since attachment may be conducted only in an axial direction of an attachment surface of the encoder or the measured subject, mechanical mounting is also applicable.

A fixation structure with the convex fixing part and the concave fixing part may be provided on the encoder, on the measured subject, or on both the encoder and the measured subject. Provision of this structure on the encoder is particularly advantageous for mass production of the encoders.

The coupling part functions, as the base of the rotation restricting member, to couple the convex fixing part and the attaching part integrally with each other. The attaching part functions to fix the rotation restricting member to the measured subject, and may have a structure similar to that of the convex fixing part or a structure different therefrom. The structure of the attaching part is not particularly limited, but the attaching part may have a known structure which is used for fixation. The configuration of the attaching part is defined generally by the configuration of the measured subject, or conditions of use or a user. Therefore, the attaching part may be formed to extend from the coupling part to any direction, or may be formed integrally with the coupling part itself. The attaching part is preferably formed to extend from the coupling part to a direction opposite to the convex fixing part. The convex fixing part and the attaching part may be coupled to each other with a concrete structure of the coupling part, or may be provided integrally with each other without a concrete structure of the coupling part. Representative examples of such a structure include one in which the convex fixing part and the attaching part are linearly formed, and more specifically, the structure is in a bar shape, a cylindrical shape, a square pole shape, or the like. These structures can be made of a metal, resin, or rubber material in a plate or bar shape.

According to the present invention, a preferable aspect of the coupling part is a structural body that extends in a lateral direction crossing or orthogonal to the rotation axis of the encoder. The laterally extending structural body preferably includes the convex fixing parts and the attaching parts that are respectively formed and disposed at a plurality of positions. In a case where the coupling part is formed in a quadrangular shape, a diamond shape, or a polygonal shape, the convex fixing parts and the attaching parts are preferably formed and disposed at respective corners. In a case where the coupling part is formed in a circular shape, the convex fixing parts or the attaching parts are preferably formed and disposed at positions rotationally symmetric with each other. The convex fixing parts or the attaching parts are more preferably disposed in pairs at opposite positions. Provision of the plurality of convex fixing parts and the attaching parts improves fixation strength and durability. On the other hand, the numbers of the convex fixing parts and the attaching parts are preferably smaller in view of the attachment process and cost. Thus, the most preferable aspect may be selected in accordance with the purpose of use, expected strength and durability, the size and specifications of the encoder, and the like.

While the coupling part may be formed as a laterally extending structural body in a bar or block shape, the coupling part is preferably formed as a plate body. Formation of the coupling part as the plate body simplifies processing and reduces cost for the material. It is preferable to form the convex fixing part and the attaching part as well as the coupling part by using the similar material. Integral processing and formation of these parts reduces production costs. Such a coupling part preferably has a projection geometry in the direction of the rotation axis of a quadrangular shape, a diamond shape, a toroidal shape, or a partial structure of one of these shapes, with an opening provided in the center to allow the rotation axis to be inserted therethrough. Alternatively, the coupling part may be formed of a plate body by simply embossing or punching respectively the opening or other necessary structures. In other words, the coupling part needs only to have a shape that enables connection, coupling, and fixation of one or a plurality of pairs of the convex fixing parts and the attaching parts, allows the rotation axis and a member necessary for fixation to be inserted therethrough, and secures a space for attachment.

These and other features and advantages of the present invention will be appreciated as the same becomes better understood by reference to the followed detailled description when considered in connection with the accompanying drawings.
- Fig. 1: is an elevational view showing a basic configuration of an encoder and a measured subject according to the present invention.
- Fig. 2: is a plan view showing the basic configuration of the encoder and the measured subject according to the present invention.
- Fig. 3: is a perspective view showing the basic configuration of the encoder and the measured subject according to the present invention.
- Fig. 4: is a perspective view of a rotation restricting member according to a first example of the present invention.
- Fig. 5: is a perspective view of a stator according to the first example of the present invention.
- Fig. 6: is a perspective view of a rotation restricting member according to a second example of the present invention.
- Fig. 7: is a perspective view of a stator according to the second example of the present invention.
- Fig. 8: is a perspective view of another rotation restricting member similar to that of the first example, in accordance with a third example of the present invention.
- Fig.9: is a perspective view of still another rotation restricting member similar to that of the first example, in accordance with a fourth example of the present invention.
- Fig. 10: is a perspective view of a further rotation restricting member similar to that of the first example, in accordance with a fifth example of the present invention.
- Fig. 11: is a perspective view of another rotation restricting member similar to that of the second example, in accordance with a sixth example of the present invention.
- Fig. 12: is a perspective view of still another rotation restricting member similar to that of the second example, in accordance with a seventh example of the present invention.
- Fig. 13: is a perspective view of a further rotation restricting member similar to that of the second example, in accordance with an eighth example of the present invention.
- Fig. 14: is a perspective view of a rotation restricting member according to a ninth example of the present invention.
- Fig. 15: is a perspective view of a stator according to the ninth example of the present invention.
- Fig. 16: is a perspective view of a convex fixing part of another rotation restricting member similar to that of the ninth example, in accordance with a tenth example of the present invention.
- Fig. 17: is a perspective view of another convex fixing part similar to that of the tenth example, in accordance with an eleventh example of the present invention.
- Fig. 18: is a perspective view of a convex fixing part of another rotation restricting member similar to that of the first example, in accordance with a twelfth example of the present invention.
- Fig. 19: is a perspective view of a convex fixing part of still another rotation restricting member similar to that of the first example, in accordance with a thirteenth example of the present invention.
- Fig. 20: is a perspective view showing a fourteenth example of the present invention.
- Fig. 21: is a perspective view showing a fifteenth example of the present invention.

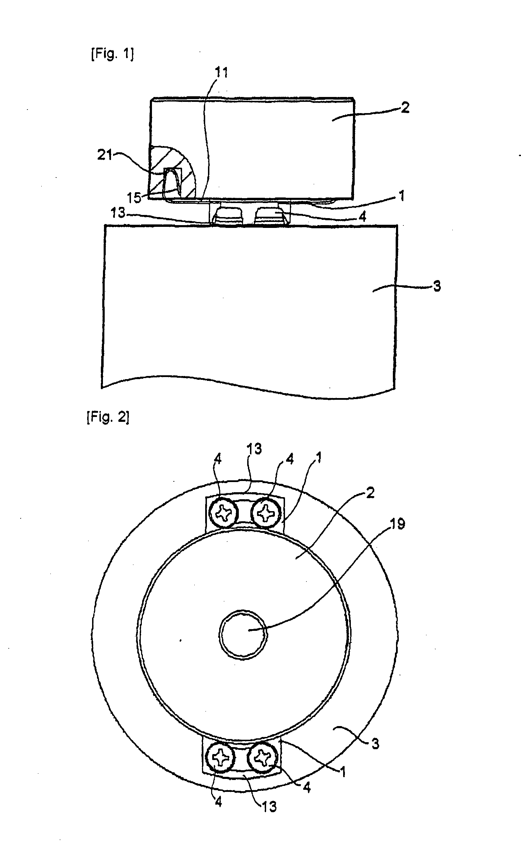

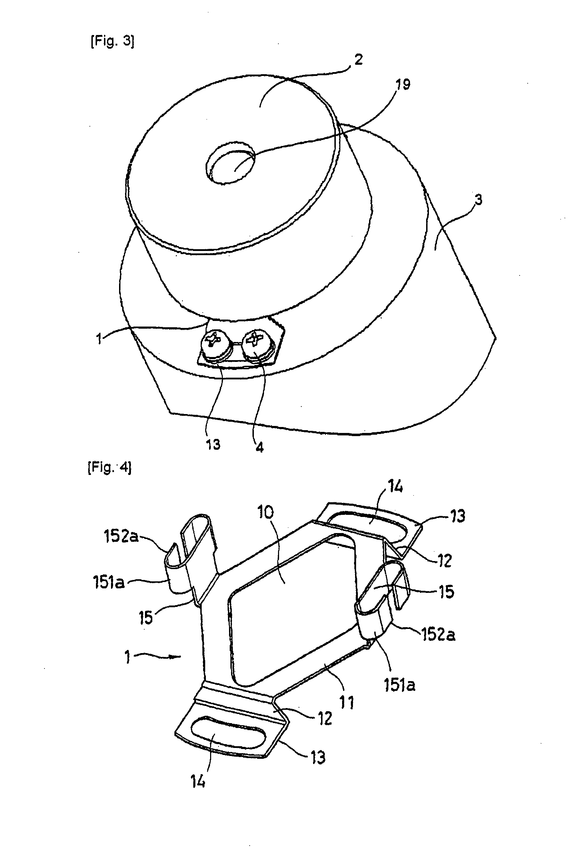

With reference to the drawings, described below is a more specific configuration of an encoder having a rotation restricting member according to the present invention. As shown in Figs. 1 to 3, there is exemplified an encoder according to one preferable aspect, including a rotor that is coupled to a rotation axis 19 of a measured subject 3, a stator 2 that rotatably supports the rotor, and a rotation restricting member 1 that locks the stator 2 to the measured subject. The rotation restricting member 1 has a coupling part 11 that extends in a lateral direction with respect to a rotation axis 19 of the rotor, convex fixing parts 15 that extend along the rotation axis respectively from at least two different positions of the coupling part, and attaching parts 13 that extend from positions different from the convex fixing parts 15 in a direction opposite to the convex fixing parts 15, and the encoder is configured such that the stator has on an attachment surface concave fixing parts 21 concave along the rotation .axis, and the convex fixing parts 15 are respectively inserted or press fitted to be locked into the concave fixing parts 21. Fig. 1 is an elevational view showing a basic configuration of an encoder 2 and the measured subject 3 according to the present invention, and Figs. 2 and 3 are respectively a plan view and a perspective view thereof.

As described above, since there is provided the coupling part 11 that extends in the lateral direction with respect to the rotation axis 19 of the rotor and the convex fixing parts 15 and the attaching parts 13 extend from positions different from each other on the coupling part, facilitated are processes for fixation and attachment of the convex fixing parts and the attaching parts. Further, when the coupling part 11 extends in a horizontal direction and is preferably formed by a plate body, the coupling part 11 easily bows to absorb misalignment or inclination of the position where the encoder 2 and the measured subject 3 are fixed with each other. Accordingly, accuracy in attachment can be degraded to further facilitate attachment and improve workability.

The encoder includes a rotor 19 that is coupled to the rotation axis of the measured subject 3, and the stator 2 that rotatably supports the rotor. Such a basic configuration of the encoder is publicly known, and is disclosed in various documents such as Japanese Examined Patent Publication No. 6-41853. The stator 2 corresponds to the encoder main body, and is generally mounted thereon with a code plate of the rotor, a detection element that detects a code formed on the code plate or a pattern thereof, a circuit board provided with a processing circuit, and the like. The stator is a structural body that generally functions as the main body or a frame of the encoder. In some cases, the stator is further provided with a cover for the circuit board and the like, a connector that connects the circuit board and an external circuit, and the like.

The rotor 19 is coupled to the measured subject, and rotates relatively or synchronously with the measured subject. The rotor 19 is rotatably supported by the stator via a shaft supporting member such as a bearing. The rotor is provided with a portion that functions as the rotation axis of the encoder, the code plate that generates a signal and a code pattern for enabling detection of a rotational angle and a rotational position, a slit plate, and the like. When the rotor (rotation axis) rotates, the detection element detects a predetermined signal or code pattern.

The rotation restricting member 1 has the coupling part 11 that extends in a direction orthogonal to the rotation axis of the rotor, that is, in the lateral direction, the convex fixing parts 15 that extend or project along the rotation axis respectively from at least two different positions of the coupling part 11, and the attaching parts 13 that extend or project in the direction opposite to the convex fixing parts 15 from positions different from the convex fixing parts 15. Each of the convex fixing parts 15 is formed to extend or project in the axial direction with respect to the coupling part 11, and is inserted or press fitted into the corresponding concave fixing part 21 of the stator 2 from the attachment surface, and is fixed thereto. Thus, the convex fixing part 15 is formed to have a projection geometry corresponding to the shape of the opening of the concave fixing part 21, as well as to be inserted or press fitted so as be plastically or elastically deformed and accommodated in the concave fixing part 21. Once inserted or press fitted, these two parts can be locked to each other by favorable retentivity due to frictional resistance between contact surfaces of these two parts.

In order that the convex fixing part 15 has predetermined elasticity or has a shape plastically deformable, the convex fixing part 15 may be formed by a plate body bent into a U-letter shape, so that such a portion in the U-letter shape bows to exert elasticity or plasticity. Similarly, the plate body may be curved into a C-letter shape, or into any other bowable shape that is known to the public. Moreover, the convex fixing part 15 may be made of natural or synthetic rubber, or a resin material. One of these materials excellent in the above property may be used only to the bowable portion.

The coupling part 11 has the attaching parts 13 each of which is formed to extend or project in the direction opposite to the convex fixing parts 15. The attaching parts 13 are provided to be attached and fixed to the measured subject 3 serving as a rotating body such as a motor. While the shape of the attaching part 13 and the fixing method thereof may be defined so as to correspond to the convex fixing part 15, the attaching part 13 preferably has a screw hole for screwing. Generally, the attaching part 13 is not used in production of the encoder, but is used when the encoder is attached to a measured subject by an end user. This part may have a screwing structure since such a structure hardly affects productivity of the encoder.

Although the coupling part 11 may be formed as the structural body in the block shape, the coupling part 11 is preferably made by a single or a plurality of plate members. When the coupling part 11 is made by a single member, and more preferably by one plate body, it is possible to reduce production costs. The convex fixing parts 15 and the attaching parts may be formed as members separately from the coupling part 11 so as to be attached to the coupling part 11. However, because of the above reason, it is preferable to form the convex fixing parts 15 and the attaching parts integrally with the coupling part 11 by using a single member or a plate member that is folded and differently processed. Alternatively, the coupling part 11 may be made of one plate-shaped block, may form a structure by laminating or combining a plurality of plate bodies, or may be configured by a member in a bar or block shape.

The material for the rotation restricting member 1 is not particularly limited, but may be metal or a resin material. In particular, preferable materials include metals and alloys such as phosphor bronze (Young's modulus is 110 GPa, and modulus of elasticity in shear is 43 GPa), austenitic stainless steel SUS304 (Young's modulus is 197 GPa, and modulus of elasticity in shear is 74 GPa), martensitic stainless steel SUS410 (Young's modulus is 200 GPa, and yielding strength is 345 MPa), duralumin A2017P (Young's modulus is 69 GPa, and yielding strength is 195 MPa), other metals and alloys having physicality equal to those of the above metals and alloys. Alternatively, resin materials are preferable. Examples of the resin materials include ABS resin, polypropylene (PP) resin, polyethylene terephthalate (PET) resin, polychlorinated biphenyl resin, polyester resin, and ethylene fluoride resin. One preferable material may be selected from those above listed in accordance with the respective conditions of use.

The stator 2 has on the attachment surface the concave fixing parts 21 of a depth concave along the rotation axis 19. As described above, the convex fixing parts 15 are inserted or press fitted respectively into the concave fixing parts 21, so that the concave fixing parts 21 preferably have a shape corresponding to that of the convex fixing parts 15, specifically, such as an opening equal to or slightly smaller than the projection plane of the convex fixing part 15. The opening may have a side surface in parallel with the rotation axis 19 of the rotor, that is, the shape identical to the opening being continuous in the depth direction, or slightly inclined in any direction. In other words, the opening may be formed to be axially extended with the shape of the opening unchanged in the depth direction, or may be formed with the opening being expanded or reduced in the depth direction. In the case of the inclined side surface, the side surface may be formed such that the opening is expanded from the open end in the depth direction. With this arrangement, the convex fixing part 15 is difficult to be inserted while being difficult to be extracted, resulting in reduced workability and improved stability. On the other hand, when the side surface is formed such that the opening is reduced from the open end in the depth direction, the convex fixing part 15 is easy to be inserted while being easy to be extracted, resulting in improved workability and reduced stability. One of these two aspects of the concave fixing part 21 may be selected in accordance with application, the production environment, and the like. Each of the concave fixing parts 21 may have a depth at least equal to the height of the convex fixing part 15, or may be formed as a hole that allows the stator 2 to be inserted therethrough. It should be noted that the side surface is preferably formed without inclination in view of workability.

The stator 2 is generally formed by processing a metal block that is made of aluminum, an alloy thereof, or the like. The material may be aluminum or an alloy thereof as described above, iron or an alloy thereof, metals such as brass or a magnesium alloy, or a resin material.

The rotation restricting member 1 is locked to the stator 2 by inserting or press fitting the convex fixing parts 15 respectively into the concave fixing parts 21. As described above, each of the convex fixing parts 15 is elastically or plastically deformed to be accommodated in the corresponding concave fixing part 21, and is retained and fixed so as to be locked due to frictional resistance, elastic deformation force, and the like acting between these parts. Force required to insertion or press fitting is not particularly restricted as long as there is obtained retentive force necessary to lock the rotation restricting member 1. However, in a case where excessively strong force is required, there are drawbacks such as extremely deteriorated workability and deformation of the rotation restricting member 1. On the other hand, extremely weak force causes a decrease in retentive force and an increased danger of disengagement due to shaking. Thus, the force required to insertion or press fitting should be appropriately adjusted.

### First Example

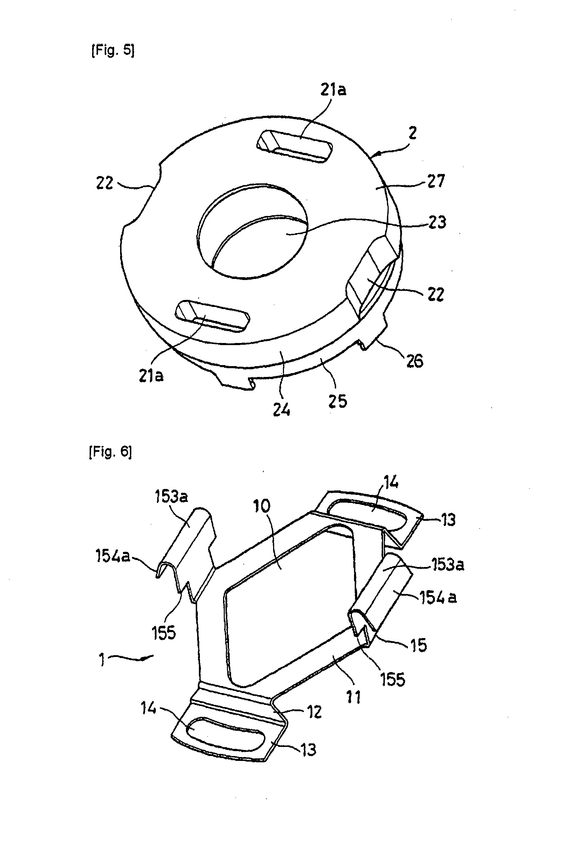

Figs. 4 and 5 respectively show a first example of the present invention. Fig. 4 is a perspective view of the rotation restricting member 1 according to one example, and Fig. 5 is a perspective view of the stator 2 according to the one example. It should be noted that other components of the encoder are not illustrated in these drawings, such as the rotor, the bearing, the code plate, the detection element, the processing circuit, and the cover. However, necessary components are actually included as an optical or magnetic encoder.

The rotation restricting member 1 shown in this example is formed by processing a plate member, preferably a metal plate of stainless steel (SUS304) or the like. As shown in the drawing, the coupling part 11 has in the center an opening 10 that allows the rotation axis to be inserted therethrough, and is configured by a flat plate body having an outline in a quadrangular shape or a diamond shape with a constant width. There are formed a pair of convex fixing parts 15 or attaching parts 13 at each opposite corners. The convex fixing parts 15 and the attaching parts 13 are formed of a single member continuously from the coupling part 11. More specifically, Sheet metal processing, punching processing, and the like are applied to the plate body, so that the convex fixing parts 15 and the attaching parts 13 are respectively formed by cutting and folding the plate body. Since these parts can be formed by processing a single plate body, it is possible to increase mass productivity and reduce the cost.

Each of the convex fixing parts 15 shown in the drawing has a base that is axially folded to extend upwards from an outer side of the corner of the coupling part 11, curved parts 151 a that are provided on the base so as to expand in respective lateral directions from the upwardly extending base and to be curved radially into U-letter shapes, and flat parts 152a that are provided on respective ends of the curved parts 151 a so as to be closed and approach to each other. That is, when projected in the axial direction, the convex fixing part 15 has a shape similar to two U-letter shapes with openings thereof facing with each other.

On the other hand, the stator 2 has in the center an opening 23 to which the rotor is fixed with a bearing member or the like interposed therebetween, and the attachment surface 27 that has a pair of concave fixing parts 21a formed at positions to face the convex fixing parts 15. Further, the stator 2 has cutout parts 22 formed at positions corresponding to the attaching parts, so that the encoder can axially approach the attaching parts 13 with no interruption and be attached to the measured subject. Thus, it is possible to axially insert a tool into the attaching parts 13 for screwing.

Each of the concave fixing parts 21a according to this example is formed as an opening corresponding to the projection geometry of the convex fixing parts 15, in a quadrangular shape with rounded corners of two U-letter disposed to face with each other. The concave fixing part 21a is slightly smaller than the convex fixing part 15, so that the curved part 151 a of the convex fixing part 15 bows and is deformed to be inserted into the concave fixing part 21 a.

The attaching parts 13 are provided on the coupling part 11 at remaining corners where the convex fixing parts 15 are not formed. Each of the attaching parts 13 has a folded part 12 that is folded to extend downwards in the axial direction opposite to the convex fixing parts, and the attaching part 13 is further folded and extends radially from the folded part 12. In other words, there is formed a Z-letter shape by the folded part 12 and the attaching part 13 as well as the coupling part 11. The attaching part 13 has a screw hole 14 that is used for screwing to the measured subject. The screw hole 14 is formed as a so-called long hole, so as to absorb some differences in size when the attaching part 13 is attached to the measured subject.

The stator 2 further has a trunk part 25 that has an outline slightly reduced from the outer diameter of the stator 2 and allows the cover to be attached thereto, and columns 26 each of which is formed as a partial projection from the outline and supports the circuit board mounted with the detection element and the processing circuit.

### Second Example

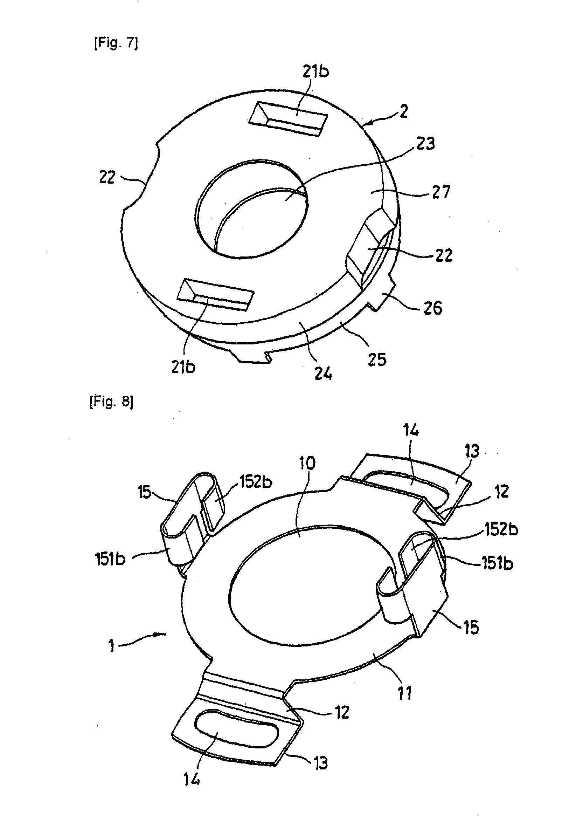

Figs. 6 and 7 respectively show a second example of the present invention. Fig. 6 is a perspective view of another rotation restricting member, and Fig. 7 is a perspective view of another stator. In this example, the convex fixing part 15 has a folded back part 153a that expands halfway while extending upwards and is further folded back radially outwards and downwards, and a flat part 154a that extends downwards from the folded back part 153a to be in parallel with the upwardly extending portion. In other words, this example adopts an axially or vertically folding back structure, while the first example adopts the laterally folding structure.

Accordingly, the stator 2 has concave fixing parts 21 b each of which having a quadrangular shape with unrounded corners, which corresponds to the projection geometry of the convex fixing part 15. In this example, the folded back part 153a is firstly inserted in a case where the convex fixing part 15 is inserted into the concave fixing part 21 b, while an end of the flat part 154a is engaged with a side surface of the concave fixing part 21 b in a case where the convex fixing part 15 is extracted from the concave fixing part 21 b. Thus, in comparison to the first example, the second example adopts a structure that realizes easy insertion and difficult extraction. This example adopts a configuration similar to that of the first example in the parts other than the above. It should be noted that an identical component is denoted by an identical symbol, and description thereof will not be repeated in this example.

### Third Example

Fig. 8 shows a third example of the present invention. Fig. 8 is a perspective view of a rotation restricting member similar to that of the first example, in accordance with another example. In the third example, the coupling part 11 is provided as a hollow circular plate having the opening 10 with a toroidal plate shape with a constant width. The convex fixing parts 15 are provided at positions rotationally symmetric and facing with each other, such that each of the convex fixing parts 15 extends upwards from on outer edge of the hollow circular plate of the coupling part 11, and expanding portions are axially curved to approach to each other. Specifically, the expanding portions extend around from the outside to the inside so as to approach to each other. The attaching parts 13 are similarly formed at positions rotationally symmetric with each other while being rotationally displaced by quarter a circle from the respective convex fixing parts 15. The coupling part 11 has an outer diameter smaller than that of the stator. This example adopts a configuration similar to that of the first example in the parts other than the above. It should be noted that an identical component is denoted by an identical symbol, and description thereof will not be repeated in this example.

### Fourth Example

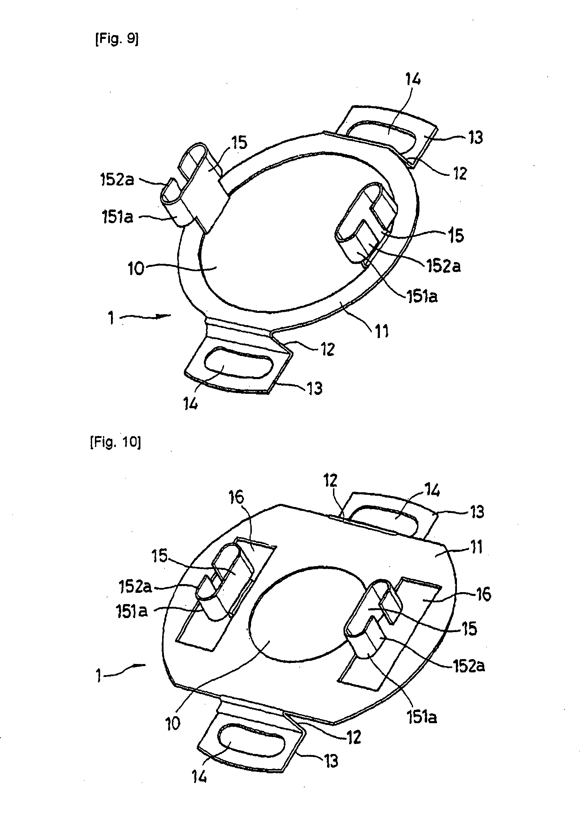

Fig. 9 shows a fourth example of the present invention. Fig. 9 is a perspective view of a rotation restricting member similar to that of the first example, in accordance with still another example. Also in this example, the coupling part 11 is provided as a hollow circular plate with a toroidal plate shape. On the other hand, each of the convex fixing parts 15 extends upwards from an inner edge of the circular plate of the coupling part 11, and the expanding portions are radially curved to approach to each other. This example adopts a configuration similar to those of the first and third examples in the parts other than the above. It should be noted that an identical component is denoted by an identical symbol, and description thereof will not be repeated in this example.

### Fifth Example

Fig. 10 shows a fifth example of the present invention. Fig. 10 is a perspective view of a rotation restricting member similar to that of the first example, in accordance with further another example. In the fifth example, the coupling part 11 has in the center the opening 10 that is round and has a diameter larger than that of the rotation axis, and is formed as a quadrangular plated body having a round outer edge in correspondence with the outer periphery of the stator. The pair of convex fixing parts 15 respectively extend upwards from positions rotationally symmetric with each other and closer to the axis within the coupling part 11, and the expanding portions radially approach to each other. The portion configuring each of the convex fixing parts 15 is formed such that the member other than the base inside the coupling part 11 is cut out and extended upwards. The coupling part 11 has quadrangular holes as the cut out portions corresponding to the convex fixing parts 15. The cut out portion is not expanded from the upwardly extending portion, but is simply folded into the U-letter shapes. The attaching parts 13 are formed outside a longer side of the quadrangular shape at positions rotationally symmetric with each other while being rotationally displaced by quarter a circle from the respective convex fixing parts 15.

According to such a configuration, the rotation restricting member can be produced with one plate by applying Sheet metal processing, embossing, and the like, with no wasted portion. This example adopts a configuration similar to those of the first and third examples in the parts other than the above. It should be noted that an identical component is denoted by an identical symbol, and description thereof will not be repeated in this example.

### Sixth Example

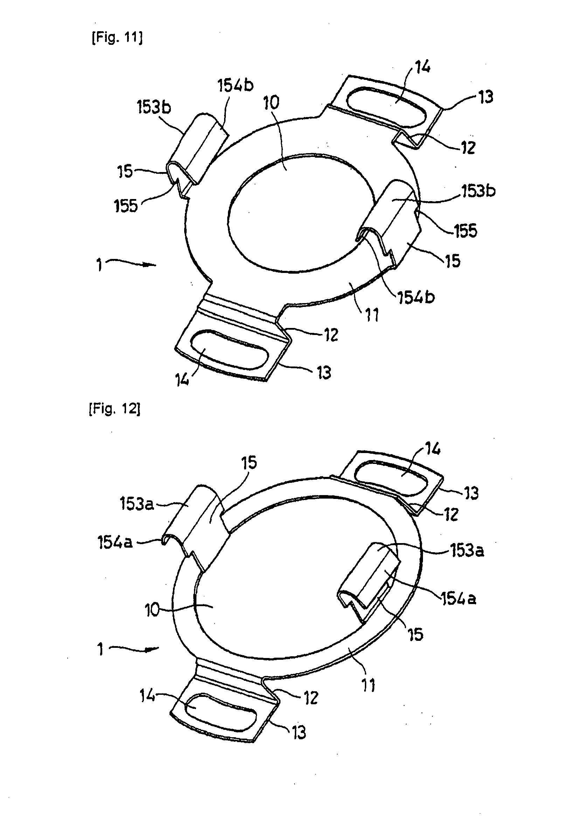

Fig. 11 shows a sixth example of the present invention. Fig. 11 is a perspective view of a rotation restricting member 1 similar to that of the second example, in accordance with another example. In this example, the coupling part 11 is provided as a hollow circular plate with a toroidal plate shape. The toroidal shape has an inner diameter larger than that of the rotation axis so as to have some margin therebetween. The toroidal shape may have a width so as to secure required strength. The convex fixing parts 15 are provided at positions rotationally symmetric and facing with each other, and extend upwards from the outer edge of the circular plate of the coupling part 11, are expanded, folded toward the axis, and then extend downwards. The attaching parts 13 are similarly formed at positions rotationally symmetric with each other while being rotationally displaced by quarter a circle from the respective convex fixing parts 15. This example adopts a configuration similar to that of the first example in the parts other than the above. It should be noted that an identical component is denoted by an identical symbol, and description thereof will not be repeated in this example.

### Seventh Example

Fig. 12 shows a seventh example of the present invention. Fig. 12 is a perspective view of a rotation restricting member similar to that of the second example, in accordance with still another example. Also in the seventh example, the coupling part 11 is provided as a hollow circular plate, with a toroidal plate shape. On the other hand, the convex fixing parts 15 respectively extend upwards from the inner edge of the circular plate of the coupling part 11, are expanded, folded radially outwards, and then extend downwards. This example adopts a configuration similar to those of the second and sixth examples in the parts other than the above. It should be noted that an identical component is denoted by an identical symbol, and description thereof will not be repeated in this example.

### Eighth Example

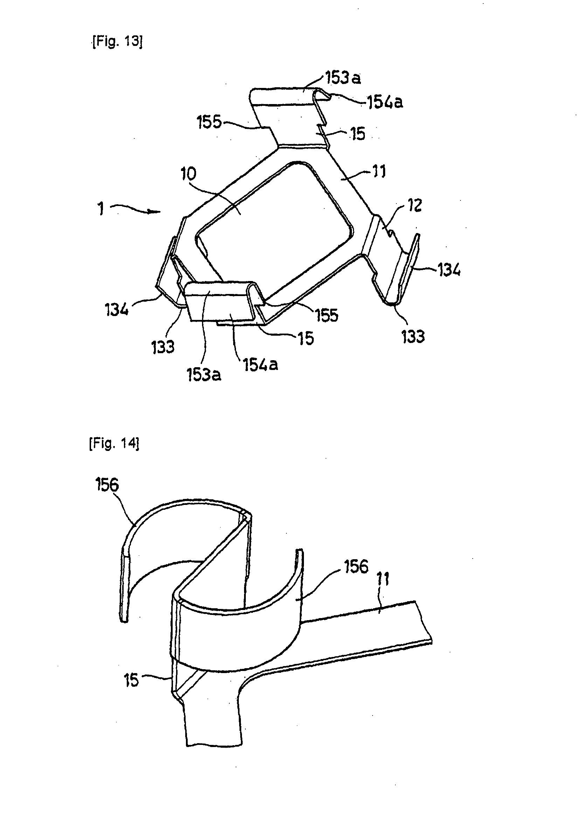

Fig. 13 shows an eighth example of the present invention. Fig. 13 is a perspective view of a rotation restricting member similar to that of the second example, in accordance with further another example. In the eighth example, each of the convex fixing parts 15 formed on the coupling part 11 has a configuration identical to that of the second example, while each of the attaching parts is formed in a configuration similar to that of the second example while being provided vertically opposite to the convex fixing parts. According to such a configuration, the rotation restricting member can be easily attached to the measured subject without screwing. However, the measured subject needs to be processed similarly to the concave fixing parts. This example adopts a configuration similar to that of the second example in the parts other than the above. It should be noted that an identical component is denoted by an identical symbol, and description thereof will not be repeated in this example.

### Ninth Example

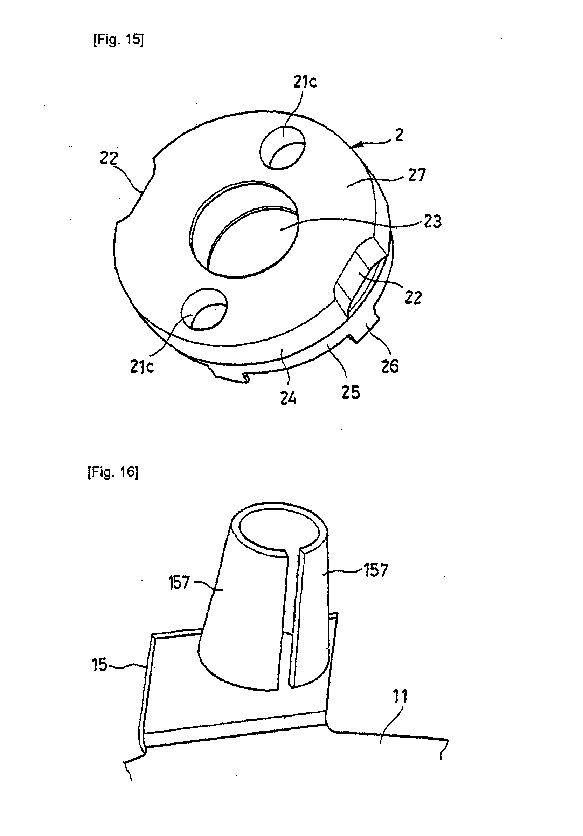

Figs. 14 and 15 respectively show a ninth example of the present invention. Fig. 14 is a partial perspective view of a convex fixing part of a rotation restricting member, and Fig. 15 is a perspective view of a stator. In this example, the convex fixing part 15 laterally expands halfway while extending upwards, and has a bent part 156 in which respective expanding ends are bent to shape circular arcs in directions opposite to each other, so as to have a projection geometry of a S-letter shape. In other words, the respective ends of the expanding portions are curved to form a structure having a cylindrical outline as a whole.

Accordingly, each of the concave fixing parts 21c of the stator 2 has a cylindrical shape in correspondence with the projection geometry of the convex fixing part 15. This example adopts a configuration similar to that of the first example in the parts other than the above. It should be noted that an identical component is denoted by an identical symbol, and description thereof will not be repeated in this example.

### Tenth Example

Fig. 16 shows a tenth example of the present invention. Fig. 10 is a partial perspective view of the convex fixing part 15 of the rotation restricting member 1. In this example, the convex fixing part 15 laterally expands halfway while extending upwards, and has bent parts 157 in each of which respective expanding ends are bent to shape circular arcs in an identical direction, so as to have a tapered cylindrical shape. In other words, the respective ends of the expanding portions are folded to have a tapered cylindrical structure like a circular cone with a tip being cut off.

Accordingly, the convex fixing part 15 may be inserted more easily into the concave fixing part 21c, while being extracted more easily. This example adopts a configuration similar to that of the ninth example in the parts other than the above. It should be noted that an identical component is denoted by an identical symbol, and description thereof will not be repeated in this example.

### Eleventh Example

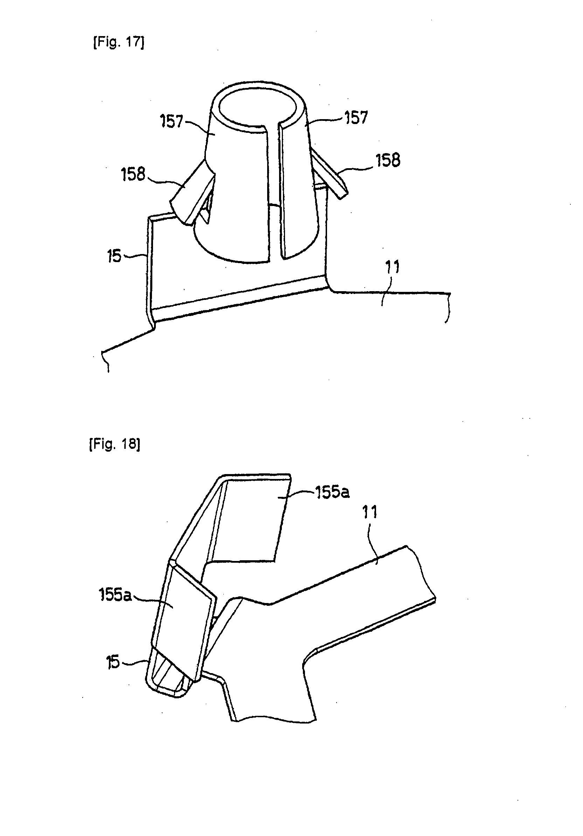

Fig. 17 shows an eleventh example of the present invention. Fig, 17 is a partial perspective view of the convex fixing part 15 of the rotation restricting member 1. In this example, the convex fixing part 15 has the bent parts 157 having the tapered cylindrical shape of the tenth example, as well as wing parts 158 in each of which the bent part 157 is opened to some extent partially from a lower part so as to form a wing shape having a structure such as a barb. In other words, the convex fixing part 15 is formed as a structural body having barbs as additional structures partially in the expanding portions in the cylindrical or circular cone shape.

Accordingly, the convex fixing part 15 can be inserted more easily into the concave fixing part 21c of the stator 2. In addition, the convex fixing part 15 is difficult to be extracted against extraction force, since the wing parts 158 functioning as barbs not only press the side surface of the concave fixing part but also are engaged therewith. This example adopts a configuration similar to that of the tenth example in the parts other than the above. It should be noted that an identical component is denoted by an identical symbol, and description thereof will not be repeated in this example.

### Twelfth Example

Fig. 18 shows a twelfth example of the present invention. Fig. 18 is a partial perspective view of the convex fixing part of the rotation restricting member. In this example, the convex fixing part is formed as a structural body in which the expanding portions of the first example is not curved but is simply bent. In other words, the expanding portions are simply folded at an acute angle rather than at a right angle. The concave fixing part of the stator 2 preferably has a quadrangular shape as in the second example. The twelfth example adopts a configuration similar to that of the tenth example in the parts other than the above. It should be noted that an identical component is denoted by an identical symbol, and description thereof will not be repeated in this example.

### Thirteenth Example

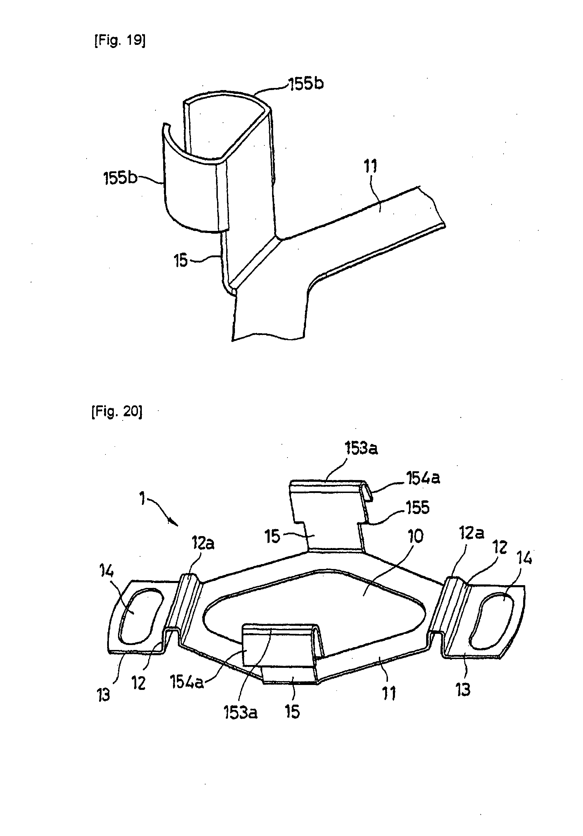

Fig. 19 shows a thirteen example of the present invention. Fig. 19 is a partial perspective view of the convex fixing part of the rotation restricting member. In this example, the convex fixing part is formed as a structural body in which the expanding portions of the convex fixing part 15 according to the ninth example are bent into an identical direction so as to respectively shape circular arcs. Specifically, while the convex fixing part 15 has a flat base, the respective ends of the expanding portions are curved to shape the circular arcs, so as to have a projection plane in a hog-backed semicircular shape. The respective ends of the circular arcs correspond to the respective ends of the expanding portions, and these respective ends are formed to face with each other with a predetermined gap therebetween. The concave fixing part of the stator 2 preferably has a semicircular shape or a hog-backed shape in correspondence with the projection geometry of the convex fixing part 15. This example adopts a configuration similar to that of the thirteenth example in the parts other than the above. It should be noted that an identical component is denoted by an identical symbol, and description thereof will not be repeated in this example.

### Fourteenth Example

Fig. 20 shows a fourteenth example of the present invention. Fig. 20 is a perspective view of a rotation restricting member having a configuration substantially same to that of the second example shown in Figs. 6 and 7. In the fourteenth example, the folded part 12 of the attaching part 13 firstly extends from the coupling part in a direction identical to the convex fixing part, and is curved downwards at a curved part 12a in a U-letter shape, and the attaching part 13 is formed at a tip of the curved part 12a. In other words, this example adopts the attaching part of a structure in which the portion folded downwards from the coupling part in the second example is firstly folded upwards and is then folded downwards. As described above, the attaching part may have a structure of extending from the coupling part in an arbitrary direction, being bent or curved, and then extending in a direction opposite to the convex fixing part. Alternatively, although now shown, the attaching part may not be bent or curved but be extended in a direction similar to the coupling part. Further alternatively, the attaching part may be formed in the coupling part.

In these structures, in comparison to that of the second example, there is provided a smaller difference in height between the coupling part 11 and the attaching parts 13, so that the gap or distance between the encoder and the measured subject may be made smaller. This example adopts a configuration similar to that of the second example in the parts other than the above. It should be noted that an identical component is denoted by an identical symbol, and description thereof will not be repeated in this example.

### Fifteenth Example

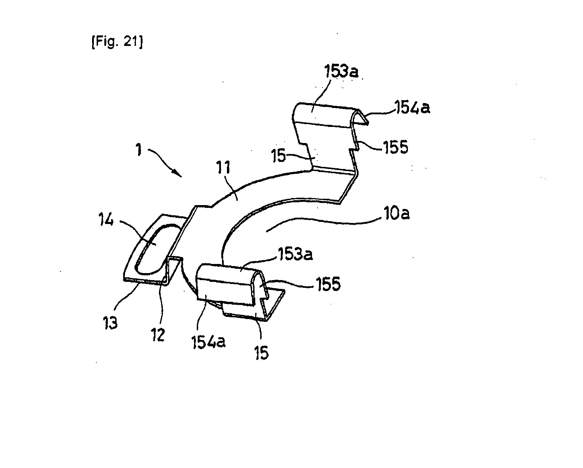

Fig. 21 shows a fifteenth example of the present invention. Fig. 21 is a perspective view of a rotation restricting member having a configuration substantially similar to that of the seventh example shown in Fig. 12. In the fifteenth example, a half of the coupling part from the base of one of the convex fixing parts 15 to the base of another convex fixing part 15 is not provided, such that the coupling part is formed in a semi-toroidal shape. Specifically, while the coupling part 11 is formed in the toroidal shape in the seventh example, the coupling part 11 in this example is reduced by half into a semicircular shape, at both ends of which are provided respectively with the convex fixing parts 15. There is provided only one attaching part 13 in the center of the semicircular shape.

Accordingly, in comparison to the seventh example, the coupling part 11 and the attaching part 13 may be produced with a smaller amount of material for a reduced cost. Further, the rotation restricting member is easy to bow, and is easy to be fixed as there is provided only one attaching part. On the other hand, such a rotation restricting member may be deteriorated in strength and durability. This example adopts a configuration similar to that of the seventh example in the parts other than the above. It should be noted that an identical component is denoted by an identical symbol, and description thereof will not be repeated in this example.

The present invention is generally applicable to a rotary encoder that functions as a device for measuring an angle, an angular speed, a rotation amount, and the like of a rotating body. The present invention is also applicable to an encoder provided with a stator and a rotor, regardless of a magnetic or optical type. Further, the present invention enables the encoder to be automatically mounted in production processes of the device.

## Claims

1. An encoder comprising:
a rotor that is coupled to a rotation axis (19) of a measured subject (3);
a stator (2) that rotatably supports the rotor; and
a rotation restricting member (1) that locks the stator (2) to the measured subject (3),
the rotation restricting member (1) including:
a coupling part (11) that functions as a base;
a convex fixing part (15) that extends along the rotation axis from the coupling part (11) toward the stator (2); and
an attaching part (13) to fix the rotation restricting member (1) to the measured subject (3) and that extends in any direction from the coupling part (11) or is formed integrally with the coupling part (11), and
the stator having (2) at least on an attachment surface (27), a concave fixing part (21) that is concave In a direction along the rotation axis (19), wherein the convex fixing part (15) is inserted or press fitted into the concave fixing part (21) so as to be locked thereto,
**characterized in that**
the rotation restricting member (1) is made of a plate member, and the attaching part (13) extends from the coupling part (11) to a direction opposite to the convex fixing part (15).

2. The encoder having the rotation restricting member (1) according to claim 1, wherein the attaching part (13) is formed to have a structure similar to that of the convex fixing part (15), and the measured subject (3) also includes a concave part similar to the concave fixing part (21).

3. The encoder having the rotation restricting member (1) according to any one of claims 1 or 2, wherein the coupling part (11) extends in a lateral direction crossing the rotation axis (19) of the rotor, the convex fixing parts (15) respectively extend along the rotation axis (19) from at least two different positions of the coupling part (11), and the attaching part (13) extends to a direction opposite to the convex fixing parts (15) from a position different from the convex fixing parts (15).

4. The encoder having the rotation restricting member (1) according to any one of claims 1 to 3, wherein the coupling part (11) has an opening (10) that allows the rotation axis (19) of the rotor to be inserted therethrough, and the coupling part (11) is formed to be disposed around the rotation axis (19).

5. The encoder having the rotation restricting member (1) according to any one of claims 1 to 4, wherein the convex fixing parts (15) are disposed respectively at positions rotationally symmetric with each other or at corners of the coupling part (11), and the attaching parts (13) are disposed respectively at positions rotationally symmetric with each other or at corners of the coupling part (11), and each of the attaching parts (13) has a screw hole.

6. The encoder having the rotation restricting member (1) according to any one of claims 1 to 5, wherein the rotor has a code plate, and the stator has a detection element.

## Patentansprüche

1. Geber, umfassend:
einen Rotor, der mit einer Drehachse (19) eines gemessenen Objekts (3) gekoppelt ist;
einen Stator (2), der den Rotor drehbar stützt; und
ein rotationsbegrenzendes Glied (1), das den Stator (2) mit dem gemessenen Objekt (3) verriegelt,
wobei das rotationsbegrenzende Glied (1) Folgendes enthält:
ein Kopplungsteil (11), das als eine Basis funktioniert;
ein konvexes Fixierteil (15), das sich entlang der Drehachse von dem Kopplungsteil (11) zu dem Stator (2) erstreckt; und
ein Befestigungsteil (13) zum Fixieren des rotationsbegrenzenden Glieds (1) an dem gemessenen Objekt (3) und das sich in irgendeiner Richtung von dem Kopplungsteil (11) erstreckt oder integral mit dem Kopplungsteil (11) ausgebildet ist, und
wobei der Stator (2) zumindest an einer Befestigungsfläche (27) ein konkaves Fixierteil (21) aufweist, das in einer Richtung entlang der Drehachse (19) konkav ist, wobei das konvexe Fixierteil (15) in das konkave Fixierteil (21) zur Verriegelung damit eingeführt oder eingepresst ist,
**dadurch gekennzeichnet, dass**
das rotationsbegrenzende Glied (1) aus einem Plattenglied hergestellt ist und sich das Befestigungsteil (13) von dem Kopplungsteil (11) in eine dem konvexen Fixierteil (15) entgegengesetzte Richtung erstreckt.

2. Geber mit dem rotationsbegrenzenden Glied (1) nach Anspruch 1, wobei das Befestigungsteil (13) mit einer Struktur ausgebildet ist, die der des konvexen Fixierteils (15) ähnelt, und das gemessene Objekt (3) auch ein konkaves Teil ähnlich dem konkaven Fixierteil (21) enthält.

3. Geber mit dem rotationsbegrenzenden Glied (1) nach einem der Ansprüche 1 oder 2, wobei sich das Kopplungsteil (11) in einer die Drehachse (19) des Rotors kreuzenden lateralen Richtung erstreckt, sich die konvexen Fixierteile (15) von mindestens zwei verschiedenen Stellen des Kopplungsteils (11) jeweils entlang der Drehachse (19) erstrecken und sich das Befestigungsteil (13) von einer anderen Stelle als die konvexen Fixierteile (15) in einer zu den konvexen Fixierteilen (15) entgegengesetzten Richtung erstreckt.

4. Geber mit dem rotationsbegrenzenden Glied (1) nach einem der Ansprüche 1 bis 3, wobei das Kopplungsteil (11) eine Öffnung (10) aufweist, die ein Einführen der Drehachse (19) des Rotors dort hindurch gestattet, und das Kopplungsteil (11) zur Anordnung um die Drehachse (19) ausgebildet ist.

5. Geber mit dem rotationsbegrenzenden Glied (1) nach einem der Ansprüche 1 bis 4, wobei die konvexen Fixierteile (15) jeweils an zueinander rotationssymmetrischen Stellen oder an Ecken des Kopplungsteil (11) angeordnet sind und die Befestigungsteile (13) jeweils an zueinander rotationssymmetrischen Stellen oder an Ecken des Kopplungsteils (11) angeordnet sind und jedes der Befestigungsteile (13) ein Schraubenloch aufweist.

6. Geber mit dem rotationsbegrenzenden Glied (1) nach einem der Ansprüche 1 bis 5, wobei der Rotor eine Codescheibe aufweist und der Stator ein Detetektionselement aufweist.

## Revendications

1. Codeur comprenant :
un rotor qui est accouplé à un axe de rotation (19) d'un sujet mesuré (3) ;
un stator (2) qui supporte à rotation le rotor ; et
un élément de limitation de rotation (1) qui verrouille le stator (2) au sujet mesuré (3),
l'élément de limitation de rotation (1) comprenant :
une partie d'accouplement (11) qui fait office de base ;
une partie de fixation convexe (15) qui s'étend le long de l'axe de rotation depuis la partie d'accouplement (11) vers le stator (2) ; et
une partie d'attache (13) pour fixer l'élément de limitation de rotation (1) au sujet mesuré (3) et
qui s'étend dans une direction quelconque à partir de la partie d'accouplement (11) ou est formée d'un seul tenant avec la partie d'accouplement (11), et
le stator (2) comportant, au moins sur une surface d'attache (27), une partie de fixation concave (21) qui est concave dans une direction le long de l'axe de rotation (19), la partie de fixation convexe (15) étant insérée ou ajustée à force dans la partie de fixation concave (21) de façon à être verrouillée à celle-ci,
**caractérisé en ce que**
l'élément de limitation de rotation (1) est composé d'un élément sous forme de plaque et la partie d'attache (13) s'étend depuis la partie d'accouplement (11) dans une direction opposée à la partie de fixation convexe (15).

2. Codeur comportant l'élément de limitation de rotation (1) selon la revendication 1, dans lequel la partie d'attache (13) est réalisée de façon à comporter une structure similaire à celle de la partie de fixation convexe (15), et le sujet mesuré (3) comprend également une partie concave similaire à la partie de fixation concave (21).

3. Codeur comportant l'élément de limitation de rotation (1) selon l'une quelconque des revendications 1 et 2, dans lequel la partie d'accouplement (11) s'étend dans une direction latérale croisant l'axe de rotation (19) du rotor, les parties de fixation convexes (15) s'étendent respectivement le long de l'axe de rotation (19) à partir d'au moins deux endroits différents de la partie d'accouplement (11), et la partie d'attache (13) s'étend dans une direction opposée aux parties de fixation convexes (15) à partir d'un endroit différent de ceux des parties de fixation convexes (15).

4. Codeur comportant l'élément de limitation de rotation (1) selon l'une quelconque des revendications 1 à 3, dans lequel la partie d'accouplement (11) comporte une ouverture (10) à travers laquelle l'axe de rotation (19) du rotor peut être inséré, et la partie d'accouplement (11) est formée pour être disposée autour de l'axe de rotation (19).

5. Codeur comportant l'élément de limitation de rotation (1) selon l'une quelconque des revendications 1 à 4, dans lequel les parties de fixation convexes (15) sont disposées respectivement à des endroits symétriques en rotation ou à des angles de la partie d'accouplement (11), et les parties d'attache (13) sont disposées respectivement à des endroits symétriques en rotation ou à des angles de la partie d'accouplement (11), et chacune des parties d'attache (13) comporte un trou de vis.

6. Codeur comportant l'élément de limitation de rotation (1) selon l'une quelconque des revendications 1 à 5, dans lequel le rotor comporte une plaque codée, et le stator comporte un élément de détection.
